# EUROPÄISCHE PATENTSCHRIFT

(11) **EP 0 572 705 B1**
(45) Veröffentlichungstag und Bekanntmachung des Hinweises auf die Patenterteilung: **20.12.1995**
(21) Anmeldenummer: 92109556.8
(22) Anmeldetag: 05.06.1992
(51) Int. Cl.: G01J 3/50, H04N 1/46

(54) **Verfahren und Vorrichtung zur Erstellung von Farbauszügen aus einer mehrfarbigen Mustervorlage**
Method and device for making colour separations of a multicolour pattern
Procédé et dispositif pour la production d'extraits de couleur d'un modèle en plusieurs couleurs

(43) Veröffentlichungstag der Anmeldung: 08.12.1993
(73) Patentinhaber: Schablonentechnik Kufstein Aktiengesellschaft, 6330 Kufstein (AT)
(72) Erfinder: Fischer, Hannes, A-6300 Wörgl (AT); Mungenast, Heinz, A-6330 Kufstein (AT)
(74) Vertreter: TER MEER STEINMEISTER & PARTNER GbR

(56) Entgegenhaltungen:
- EP-A- 0 033 493
- DE-A- 2 637 055
- DE-A- 2 923 477
- DE-A- 3 922 176
- DE-B- 1 921 460

## Beschreibung

Die Erfindung liegt auf dem Gebiet der rechnergesteuerten Bearbeitung von farbigen Mustervorlagen, beispielsweise textilen Mustervorlagen, und bezieht sich insbesondere auf ein Verfahren und auf eine Vorrichtung zur Erstellung von Farbauszügen aus einer mehrfarbigen Mustervorlage, insbesondere für den Einzelfarbendruck.

Aus der DE-A3 922 176 ist bereits ein gattungsgemäßes Verfahren zur Erstellung von Farbauszügen aus einer mehrfarbigen Mustervorlage, insbesondere für den Einzelfarbendruck, bekannt, bei dem die Mustervorlage punktweise polychromatisch abgetastet wird, um in einem Farbraum liegende Farbsignalwerte zu erhalten, die zur Bildung der Farbauszüge herangezogen werden, wobei eine vorbestimmte Anzahl von Farbsignalwerten herausgesucht wird, um einen Korrekturfarbraum zu erhalten, die Mustervorlage ein zweites Mal punktweise polychromatisch abgetastet wird, und die dabei erhaltenen Farbsignalwerte durch die an derselben Stelle liegenden Farbsignalwerte des Korrekturfarbraums ersetzt werden. Im Gegensatz zum Mehrfarben-Mischdruck, bei dem der Farbauftrag auf das Druckmedium durch Übereinanderdrucken unterschiedlicher Anteile verschiedener Druckfarben erfolgt, wird beim Einzelfarbendruck jede zu druckende Farbe vor dem Druckprozeß ermischt und dann getrennt auf das Druckmedium übertragen, so daß für jede Farbe einer Mustervorlage ein entsprechender Farbauszug hergestellt werden muß.

Üblicherweise wird zur Herstellung derartiger Farbauszüge die Mustervorlage mit Hilfe einer optoelektronischen Vorrichtung punktweise entlang von nebeneinanderliegenden Zeilen oder Spalten abgetastet, um für jeden Abtastpunkt einen Farbsignalwert zu erhalten, der zur Bildung der Farbauszüge herangezogen wird. Jeder Farbsignalwert für einen Abtastpunkt kann dabei aus drei oder noch mehr Farbanteilen zusammengesetzt sein, beispielsweise für die Farben Rot, Grün und Blau, die mit Hilfe farbempfindlicher Detektoren gemessen werden. Man spricht allgemein von einer polychromatischen Abtastung; speziell im Falle dreier Farben von einer trichromatischen Abtastung. So wäre z. B. auch eine Abtastung mit vier bis sechs Farben möglich.

Enthält die Mustervorlage eine sehr große Anzahl verschiedener Farben, so muß eine entsprechend hohe Anzahl von Farbauszügen erstellt werden. Dies ist aus praktischen Gründen unerwünscht, zumal für jeden Farbauszug auch eine spezielle Druckform hergestellt werden muß. Darüber hinaus müssen für jeden Abtastpunkt der Mustervorlage die Farbanteile gespeichert werden, was aufgrund der enormen Datenmenge eine hohe Speicherkapazität voraussetzt.

Der Erfindung liegt die Aufgabe zugrunde, einerseits eine Mustervorlage mit einer gegenüber der Anzahl ihrer Farben erheblich verringerten Anzahl von Farbauszügen reproduzieren zu können, ohne daß wesentliche Beeinträchtigungen hinsichtlich der Farbtreue und der Lebendigkeit der Mustervorlage in Kauf genommen werden müssen.

Darüber hinaus soll eine geeignete Vorrichtung zur Durchführung des Verfahrens geschaffen werden.

Die Lösung der gestellten Aufgabe zeichnet sich dadurch aus, daß
- zur Bildung des Korrekturfarbraums eine vorbestimmte Anzahl von am häufigsten auftretenden Farbsignalwerten herausgesucht wird,
- das Heraussuchen automatisch geschieht, und
- die Mustervorlage bei der zweiten Abtastung in einem feineren geometrischen Raster als bei der ersten Abtastung gescannt wird.

Bei der punktweisen Abtastung der Mustervorlage werden für jeden Bildpunkt z. B. drei Farbanteile (Rot, Grün, Blau) gemessen, die einen im Farbraum (RGB-Raum) liegenden Farbsignalwert definieren. Je nach Größe der Farbanteile (Intensität der Teilfarben) werden unterschiedliche Farbsignalwerte erhalten, die im Farbraum an unterschiedlichen Positionen liegen. Die Position eines Farbsignalwerts wird dabei durch vektorielle Addition der gemessenen Farbanteile erhalten, die zuvor in Digitalwerte umgewandelt worden sind.

Treten bei der Abtastung der Mustervorlage Farben mehrfach auf, so werden entsprechend viele Farbsignalwerte erhalten, die derselben Position im Farbraum zugeordnet sind. Nach Beendigung der Abtastung der Mustervorlage kann daher eine gewünschte Anzahl von am häufigsten aufgetretenen Farbsignalwerten herausgesucht werden, wobei diese Farbsignalwerte in einer Tabelle gespeichert werden, die auch als Farbpalette bezeichnet werden kann. Diese Farbpalette wird fortlaufend adressiert und enthält also unter jeder Adresse einen der am häufigsten aufgetretenen Farbsignalwerte. Beispielsweise lassen sich in dieser Farbpalette 240 der am häufigsten aufgetretenen Farbsignalwerte speichern. Weitere 16 Farbsignalwerte können für Systemzwecke gespeichert werden, wie noch erläutert wird.

Der zuvor genannte Farbraum, der zunächst noch nicht vollständig mit Farbsignalwerten belegt ist, wird dann mit den am häufigsten aufgetretenen Farbsignalwerten ausgefüllt, um einen Korrekturfarbraum zu erhalten. Dabei werden sowohl noch nicht belegte Positionen des Farbraums mit den am häufigsten aufgetretenen Farbsignalwerten beschrieben als auch solche Positionen, für die zuvor Farbsignalwerte erhalten worden sind, die nicht zu den am häufigsten aufgetretenen Farbsignalwerten gehören.

Die Bildung des Korrekturfarbraums kann dabei so erfolgen, daß die Positionen bzw. Adressen des zuvor erhaltenen Farbraums mit demjenigen der am häufigsten aufgetretenen Farbsignalwerte belegt werden, zu dem sie den geringsten topologischen Abstand im Farbraum haben. Liegt eine zu belegende Position genau zwischen zwei Signalwerten, die zu den am häufigsten gehören, so wird diese Position mit demjenigen Farbsignalwert belegt, der häufiger als der andere aufgetreten ist. Sind beide gleich häufig aufgetreten, so wird einer von beiden verwendet.

Anstelle der topologischen Abstände können auch die physiologischen Abstände herangezogen werden, wozu lediglich die Farbsignalwerte zuvor logarithmiert zu werden brauchen.

Die Belegung des Farbraums mit den am häufigsten aufgetretenen Farbsignalwerten bedeutet nichts anderes, als daß jeder Position des Farbraums eine Adresse der Farbpalette zugeordnet wird. Der Korrekturfarbraum enthält daher mit anderen Worten nur noch Adressen der Farbpalette. Die Adressen der Farbpalette (z. B. 256 Adressen) lassen sich jeweils durch 8 Bit darstellen, so daß weniger Speicherplatz benötigt wird als bei der Speicherung der jeweiligen Farbanteile unmittelbar an den einzelnen Positionen des Korrekturfarbraums (3 x 8 bit bei 3 Farbanteilen). Der Speicherbedarf läßt sich somit auf 1/3 reduzieren.

Da es nicht notwendig ist, die Häufigkeitszählungen im Zusammenhang mit dem zuvor erhaltenen Farbraum aufzubewahren, kann dieser gelöscht und damit der entsprechende Speicherbereich freigegeben werden. Es liegt somit nur noch der Korrekturfarbraum vor, und zwar in Form einer Tabelle, bei der unter jeder Adresse eine Adresse der Farbpalette gespeichert ist. Beispielsweise kann die den Korrekturfarbraum darstellende Adreßtabelle 32.768 Adressen aufweisen, wenn z. B. die Intensität der Farbanteile (Rot, Grün, Blau) jeweils in 32 Abstufungen gemessen wird (32 x 32 x 32 = 32.768).

Erfindungsgemäß wird nun die Mustervorlage ein zweites Mal punktweise polychromatisch oder trichromatisch abgetastet, und zwar wiederum entlang von nebeneinanderliegenden Zeilen oder Spalten. Auch jetzt werden für jeden Bildpunkt z. B. die Farbanteile (Rot, Grün, Blau) intensitätsmäßig gemessen und diese Meßwerte in Digitalwerte umgewandelt, um auf diese Weise durch vektorielle Addition der Farbanteile den Korrekturfarbraum adressieren zu können. Die erhaltene Adresse ist mit anderen Worten eine Adresse der zuvor genannten Adreßtabelle, wobei unter dieser Adresse eine Adresse der Farbpalette gespeichert ist, unter der wiederum ein Farbsignalwert (einer der am häufigsten aufgetretenen) gespeichert ist.

Wird also die Mustervorlage beim zweiten Mal punktweise entlang von Spalten oder Zeilen abgetastet, so braucht für jeden Bildpunkt letztlich nur die jeweils aufgesuchte Adresse der Farbpalette abgespeichert zu werden, so daß für jeweils ein Musterbild ein String bzw. eine Kette von Farbpalettenadressen aufgezeichnet wird. Der Ersatz der bei der zweiten Abtastung erhaltenen Farbsignalwerte durch die an derselben Stelle liegenden Farbsignalwerte des Korrekturfarbraums erfolgt also über die Adressierung der Adreßtabelle und die nachfolgende Adressierung der Farbpalette. Da neben der Adreßtabelle nur die Farbpalette zu speichern ist und der String nur die Adressen der Farbpalette speichert, wird nur relativ wenig Speicherraum zur Speicherung der Musterbildinformation im Vergleich zu demjenigen Fall benötigt, bei dem für jeden Bildpunkt des Musterbilds der Farbsignalwert zu speichern ist. Die Auswahl einer gewünschten Anzahl von am häufigsten auftretenden Farbsignalwerten, das Ausfüllen des Farbraums mit diesen Farbsignalwerten und die erneute Abtastung des Musterbilds stellen darüber hinaus sicher, daß sich das Muster farbgetreu und ohne Beeinträchtigung der Lebhaftigkeit reproduzieren läßt.

Aus dem erhaltenen String lassen sich dann die Farbauszüge in einfacher Weise dadurch erzeugen, daß aus ihm die unterschiedlichen Farbpalettenadressen lagegetreu herausgelesen werden. Auf diese Weise werden die Farbauszüge ausgelagert, beispielsweise auf entwickelbare Schwarz-Weiß-Filme oder auf magnetische Datenträger, oder dergleichen.

Die Größe von Bildpunkten der Farbauszüge kann auch dem relativen Anteil der verwendeten ausgewählten Farbe entsprechen, was bedeutet, daß ein Bildpunkt umso größer dargestellt wird, je größer die Farbintensität ist.

Die Mustervorlage wird bei der zweiten Abtastung in einem feineren geometrischen Raster als bei der ersten Abtastung gescannt werden. Mit anderen Worten liegen hier die Abtastlichtpunkte dichter zusammen als bei der ersten Abtastung. Sie können sich sogar überlappen. Hierdurch lassen sich sehr farbgetreue Reproduktionen des Musterbilds erzeugen, wobei sich nur die Länge des Strings der Farbpalettenadressen vergrößert. Dies stellt im Vergleich zur Speicherung der Farbsignalwerte für jeden der Abtastpunkte nur eine unwesentliche Vergrößerung der Speicherkapazität dar. Die Größe des Abtastlichtpunkts auf der Mustervorlage läßt sich in Abhängigkeit der Musterstruktur wählen, z. B. in Abhängigkeit ihrer Rauhigkeit. In jedem Fall sollte der Abtastlichtfleck so groß sein, daß noch genügend Licht an der Vorlage reflektiert wird.

Nach einer anderen sehr vorteilhaften Weiterbildung der Erfindung wird das Musterbild in einem weiteren Schritt nur unter Verwendung der nach der zweiten Abtastung erhaltenen Farbsignalwerte des Korrekturfarbraums reproduziert, um dann anhand des reproduzierten Musterbilds eine Anzahl vorbestimmter Farben auszuwählen. Sodann werden die Farbsignalwerte des Korrekturfarbraums durch die diesen ausgewählten Farben entsprechenden Farbsignalwerte ersetzt.

Mit anderen Worten erfolgt jetzt eine zweite Reduktion der Farben im Musterbild, und zwar im Hinblick auf zu verwendende Druckfarben. Die Auswahl der Farben anhand des reproduzierten Musterbilds kann z. B. durch einen Betrachter des auf einem Monitor dargestellten Musterbilds erfolgen oder aber auch automatisch, wenn die Farben zuvor hinsichtlich ihrer Farbanteile und Intensität definiert worden sind.

Die Reduktion der Farben erfolgt in der bereits zuvor beschriebenen Weise im Korrekturfarbraum, wobei wiederum jeder Farbsignalwert des Korrekturfarbraums durch einen solchen einer ausgewählten Farbe ersetzt wird, zu der er im Korrekturfarbraum den geringsten topologischen Abstand hat. Auch hier kann an die Stelle des topologischen Abstands wiederum der physiologische Abstand treten. Mit anderen Worten werden die unter den Adressen der Adreßtabelle gespeicherten Adressen der Farbpalette geändert und die Adreßtabelle wiederum so angesteuert, wie dies bei der zweiten Abtastung schon der Fall war.

Nach einer anderen Ausgestaltung der Erfindung werden bei einem Ersatz von Farbsignalwerten des Korrekturfarbraums durch denjenigen einer ausgewählten Farbe Überschüsse oder Defizite von Farbanteilen (Rot, Grün, Blau) der zwei nächstgelegenen ausgewählten Farben von Adresse zu Adresse aufsummiert und bei Erreichen eines Farbsignalschwellenwerts für jeweils eine dieser ausgewählten Farben deren Farbsignalwert zur Musterpunktbildung verwendet, und zwar unter Verrechnung der Farbanteile dieses Farbsignalwerts mit den bis dahin durch Aufsummierung erhaltenen Farbanteilen. Die Überschüsse oder Defizite nach dem Setzen eines jeweiligen Musterpunkts können auch mit einem Memoryfaktor multipliziert werden, der kleiner als 1 ist. Dadurch lassen sich Übergänge zwischen den Farben noch farbgetreuer darstellen.

Bei der elektronischen Reproduktion eines Musterbilds hat es sich als besonders vorteilhaft erwiesen, neben einem Großbildmonitor für die Gesamtbildausgabe des Musters auch einen Großbildmonitor für die Detailbildausgabe des Musters zu verwenden, also zur Darstellung von Ausschnitten des Musters. Da nach wie vor relativ hohe Datenmengen zu verarbeiten sind, weist eine Vorrichtung zur Durchführung des erfindungsgemäßen Verfahrens eine Mehrzahl von Transputereinheiten auf, wobei jeder Transputereinheit jeweils eine gesonderte magnetische Festplatte zur Datenspeicherung zugeteilt ist. Die Transputereinheiten sind an einen gemeinsamen Datenbus angeschlossen, über welchen die Musterdaten von z. B. einem Scanner gesendet werden. Alle diese Transputereinheiten sind über jeweils einen gemeinsamen Bus an einen Transputer mit Großbildmonitor für die Gesamtbildausgabe und Bedienungsfunktionsanzeige sowie an einen weiteren Transputer mit Großbildmonitor für die Detailbildausgabe gekoppelt. Den Transputereinheiten ist vorzugsweise ein gemeinsamer Rechner mit Bildschirm als Bedien-Schnittstelle zugeordnet.

Die Erfindung wird nachfolgend unter Bezugnahme auf die Zeichnung näher beschrieben. Es zeigen:
**Fig. 1** einen Abtastkopf zur Abtastung einer Mustervorlage,
**Fig. 2** Farbsignalwerte in einem Farbraum,
**Fig. 3** eine Farbpalette zur Speicherung von Farbsignalwerten, die bei der Musterabtastung am häufigsten aufgetreten sind,
**Fig. 4** eine Farbraum-Adreßtabelle,
**Fig. 5** einen String mit Farbpaletten-Adressen,
**Fig. 6** verschiedene Farbauszüge, die anhand des Strings gemäß Fig. 5 gewonnen werden,
**Fig. 7** eine Tabelle zur Erläuterung der Korrektur des Korrekturfarbraums,
**Fig. 8** ein Blockschaltbild des Gesamtaufbaus einer Vorrichtung zur Durchführung des erfindungsgemäßen Verfahrens.
**Fig. 9** ein Blockdiagramm eines Teilaufbaus der Vorrichtung nach Fig. 8, und
**Fig. 10** ein Blockdiagramm zur Erläuterung der Verbindung zwischen einem Transputer und einer ihm zugeordneten Festplatte.

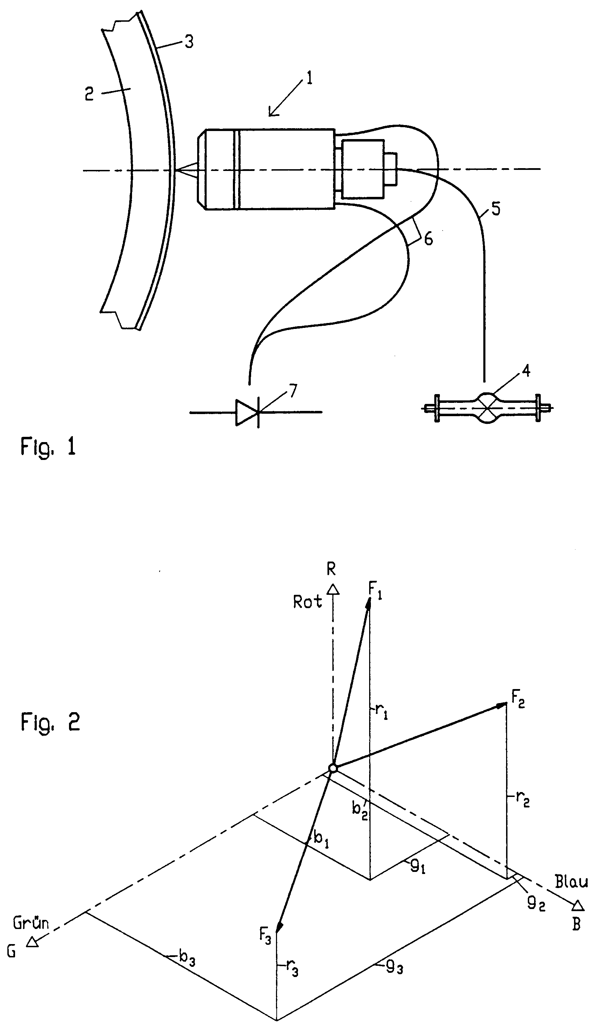

Die Fig. 1 zeigt ein optisches Abtastsystem mit einem optischen Abtastkopf 1 zur Abtastung einer auf einem rotierenden Zylinder 2 befestigten Mustervorlage 3. Die Mustervorlage kann z. B. eine textile Vorlage sein, z. B. eine Stoffbahn, ein Teppich, und dergleichen, eine Papiervorlage, usw. Weißes Licht von einer Lichtquelle 4 gelangt in eine Lichtleitfaser 5, um mit diesem Licht die Mustervorlage 3 punktförmig beleuchten zu können. Die Lichtquelle 4 kann beispielsweise eine Xenon-Hochdrucklampe sein. Mit Hilfe von Lichtleitfasern 6 wird an der Mustervorlage 3 reflektiertes Licht aufgefangen und zu einer Fotodetektoranordnung 7 übertragen, die farbselektive Eigenschaften aufweist. Um eine eindeutige Beziehung zwischen den von der Fotodetektoranordnung 7 gelieferten Signalen und der Position des Abtastlichtflecks auf der Mustervorlage 3 zu erhalten, sind die Abtastfrequenz bei der Musterabtastung, die Bewegungsbahn des optischen Abtastkopfs, die Lage der Mustervorlage 3 auf dem Zylinder 2 und die Rotationsgeschwindigkeit des Zylinders 2 vorgegeben oder gespeichert.

Soll die Mustervorlage 3 reproduziert werden, so wird sie zunächst auf den Zylinder 2 aufgespannt. Sie wird dann punktförmig mit Weißlicht von der Lichtquelle 4 beleuchtet. Das Abrastern der Mustervorlage 3 erfolgt zunächst in einem groben geometrischen Raster und dient zur Feststellung, welche Farben in welcher Häufigkeit vorkommen.

Das von der Mustervorlage 3 reflektierte Licht wird über die Lichtleitfasern 7 aufgefangen, wobei die Intensität des reflektierten Lichts in 3 Wellenlängenbereichen gemessen wird, und zwar mit Hilfe der bereits erwähnten Fotodetektoranordnung 7. Die Meßwerte werden nachfolgend in digitale Werte umgewandelt, die als Farbanteile bezeichnet werden. Der erste Wellenlängenbereich liegt zwischen 420 und 480 nm und entspricht der Farbe Blau, der zweite Wellenlängenbereich liegt zwischen 480 und 570 nm und entspricht der Farbe Grün, während der dritte Wellenlängenbereich zwischen 570 und 650 nm liegt und der Farbe Rot entspricht. Entsprechend der in den drei Wellenlängenbereichen gemessenen Intensitäten wird jeder Farbpunkt der Mustervorlage 3 in eine dreidimensionale Skala von 32 768 Farben eingetragen. Diese Skala kann auch als Farbraum verstanden werden, auf dessen positiven Halbachsen die Intensität des roten, grünen und blauen Farbanteils in 32 Abstufungen aufgetragen ist, und der daher 32 x 32 x 32 = 32.768 Zellen für die Farben enthält. Jede dieser Zellen entspricht einem Farbsignalwert, der sich vektoriell aus den drei Farbanteilen zusammensetzt. Es wird nun für jede Zelle die Zahl der Farbsignalwerte, die bei dieser ersten Grobabrasterung der Mustervorlage 3 festgestellt wurde, eingetragen. Diese Skala wird nachfolgend als Farbraum bzw. RGB-Farbraum bezeichnet.

Der genannte Farbraum ist in Fig. 2 skizziert. Dort sind der Übersicht wegen nur drei Farben F1, F2 und F3 eingetragen, also Vektoren, die vom Ursprung des Farbraums ausgehen. Die genannten Farben F1, F2 und F3 setzen sich jeweils aus Farbanteilen r1, g1, b1; r2, g2, b2; r3, g3, b3 zusammen, also aus drei gemessenen Farbanteilen für die Farben Rot, Grün und Blau. Entsprechend der 32 Intensitätsabstufungen für jede Farbe wird jeweils am Ende eines der Vektoren eine Zelle erhalten, die durch die zugehörigen Farbanteile des Vektors adressiert wird.

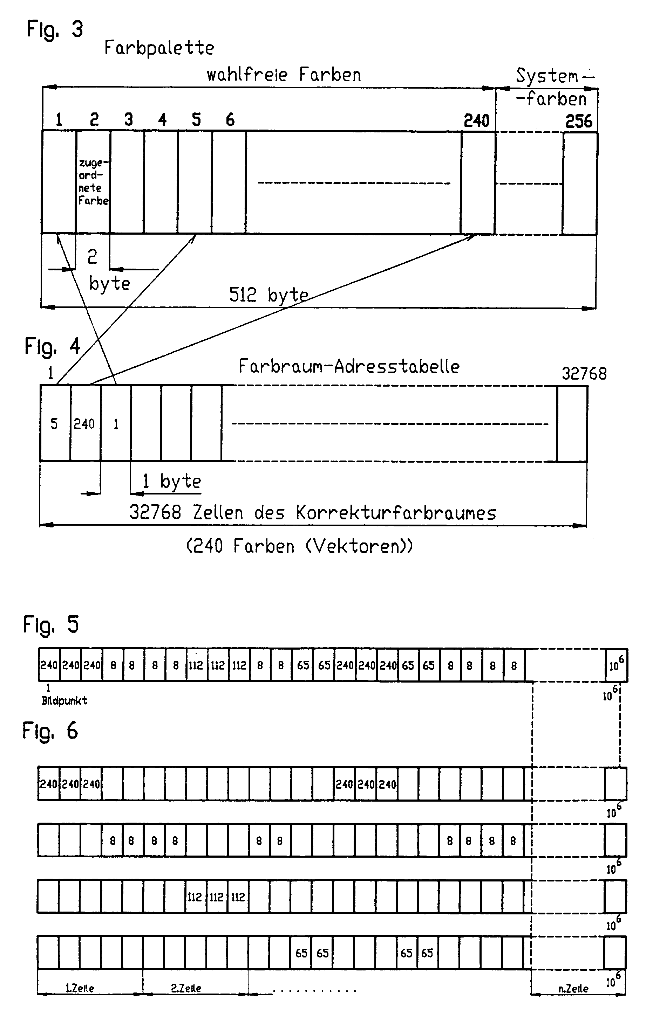

Der Farbraum wird nun entsprechend der festgestellten Häufigkeit der Farbsignalwerte der Mustervorlage 3 auf 240 Farben reduziert. Das bedeutet, daß die Farbsignalwerte zunächst nach der Häufigkeit ihres Vorkommens sortiert und die am häufigsten vorkommenden ersten 240 Farbsignalwerte bzw. deren RGB-Anteile (Farbanteile) in einer neuen Tabelle gespeichert werden, die maximal 256 Adressen umfaßt. Diese Tabelle ist in Fig. 3 dargestellt und wird nachfolgend als Farbpalette bezeichnet. In dieser Farbpalette werden 16 Farben für Systemzwecke benötigt, also z. B. zur Farbgebung von Rändern und Bedienungsfeldern auf einem Monitor, so daß maximal 240 Adressen für die gemessenen Farbsignalwerte verbleiben. Jede der Adressen der in Fig. 3 gezeigten Farbpalette umfaßt einen Speicherbereich von 2 byte, so daß sich dort ein Farbsignalwert unterbringen läßt, der aus 3 x 5 bit besteht, wobei jeweils 5 bit (Farbanteil) für die genannten 32 Intensitätsabstufungen benötigt werden.

Aus dem in Fig. 2 gezeigten Farbraum wird nun ein Korrekturfarbraum entwickelt, und zwar nur unter Verwendung der 240 in der Farbpalette gespeicherten Farbsignalwerte. Mit anderen Worten werden die restlichen Zellen des Farbraums durch diese 240 Farbsignalwerte belegt. Dabei entspricht die Adresse jeder Zelle des Korrekturfarbraums jener der entsprechenden Zelle des zuvor erhaltenen Farbraums, der Zelleninhalt aber die Nummer oder Adresse jenes Farbsignalwerts der Farbpalette, zu welchem die Zelle des Farbraums den geringsten topologischen Abstand hat. Statt dessen könnte auch die Nummer oder Adresse jenes Farbsignalwerts der Farbpalette eingetragen werden, zu welcher der geringste physiologische Abstand festgestellt wird. Diese Maßnahme liefe im wesentlichen auf eine logarithmische Verzerrung des Farbraums hinaus.

Der Korrekturfarbraum weist also ebenfalls 32 x 32 x 32 = 32.768 Zellen auf und kann als Farbraum-Adreßtabelle bezeichnet werden, die in Fig. 4 dargestellt ist. Jede Adresse der Farbraum-Adreßtabelle in Fig. 4 umfaßt einen Speicherbereich von 1 byte, um eine der 240 Adressen der Farbpalette speichern zu können.

Wird eine Adresse der Farbraum-Adreßtabelle aufgesucht, so wird anschließend die dort gespeicherte Adresse der Farbpalette aufgesucht, so daß dann aus der Farbpalette der entsprechende Farbsignalwert ausgelesen werden kann, zu dem die drei Farbanteile (3 x 5 bit) gehören.

Es folgt jetzt eine zweite Abrasterung der Mustervorlage 3, und zwar ein sogenannter Feinscannvorgang, bei welchem die Mustervorlage 3 unter Zugrundelegung eines sehr viel feineren geometrischen Rasters nach ihren Farbwerten abgetastet wird. Die Abtastlichtflecke liegen jetzt dichter beieinander als bei der ersten Abtastung und können sich auch überlagern. Die Größe des Abtastlichtflecks wird abhängig von der Musterstruktur gewählt und kann z. B. 70 »m (Durchmesser auf der Vorlage) betragen.

Die jetzt für jeden Bildpunkt erhaltenen Farbanteile (Rot, Grün, Blau) adressieren eine Zelle im Korrekturfarbraum bzw. eine Adresse in der Farbraum-Adreßtabelle. Unter dieser Adresse ist die zugeordnete Adresse der Farbpalette gespeichert, die jetzt für den gerade abgetasteten Bildpunkt in einer dritten Tabelle gespeichert wird, die in Fig. 5 dargestellt ist. Sei angenommen, daß die Farbanteile bei der Abtastung des ersten Bildpunktes der Mustervorlage 3 die zweite Adresse der Farbraum-Adreßtabelle angeben, so wird nachfolgend in der in Fig. 5 gezeigten dritten Tabelle als erster Speicherwert die Adresse 240 der Farbpalette gespeichert. Dieser Vorgang wird so lange wiederholt, bis die gesamte Mustervorlage 3 abgescannt ist. Wird sie z. B. mit Hilfe von 1 Million Bildpunkten abgetastet, so weist die dritte Tabelle in Fig. 5 10⁶ Speicherplätze auf, in denen sich Adressen der Farbpalette befinden. Diese dritte Tabelle kann auf einer Festplatte abgespeichert werden.

Aus der dritten Tabelle lassen sich dann, falls zu diesem Zeitpunkt schon gewünscht, Farbauszüge destillieren, und zwar durch Erstellung der weiteren und in Fig. 6 gezeigten Tabellen, in denen jeweils nur dieselben Adressen der Farbpalette enthalten sind. Die Lage dieser Adressen in den weiteren Tabellen entspricht dabei ihrer Lage in der dritten Tabelle.

Das Musterbild 3 kann statt dessen in einem weiteren Schritt aber auch auf einem Großbildschirm dargestellt werden, um es begutachten zu können. Dabei lassen sich drei bis acht und in Sonderfällen bis zu 52 Druckfarben definieren. Im nächsten Schritt teilt man nun den für jeden Musterpunkt festgehaltenen Palettenfarbton einer der definierten Druckfarben zu, was wiederum durch entsprechende Umbelegung der Zellen des Korrekturfarbraums erfolgt, und zwar in der bereits oben beschriebenen Weise. Wählt man z. B. sechs Druckfarben aus den 240 Farben der Farbpalette aus, so existieren im Korrekturfarbraum nur noch sechs Farbvektoren, so daß die restlichen Zellen des Korrekturfarbraums in der gleichen Weise wie zuvor beschrieben wiederum mit den Farbpaletten-Adressen dieser sechs ausgewählten Druckfarben belegt werden. Mit anderen Worten erscheinen unter den Adressen der Farbraum-Adreßtabelle in Fig. 4 nur noch diese sechs Farbpaletten-Adressen.

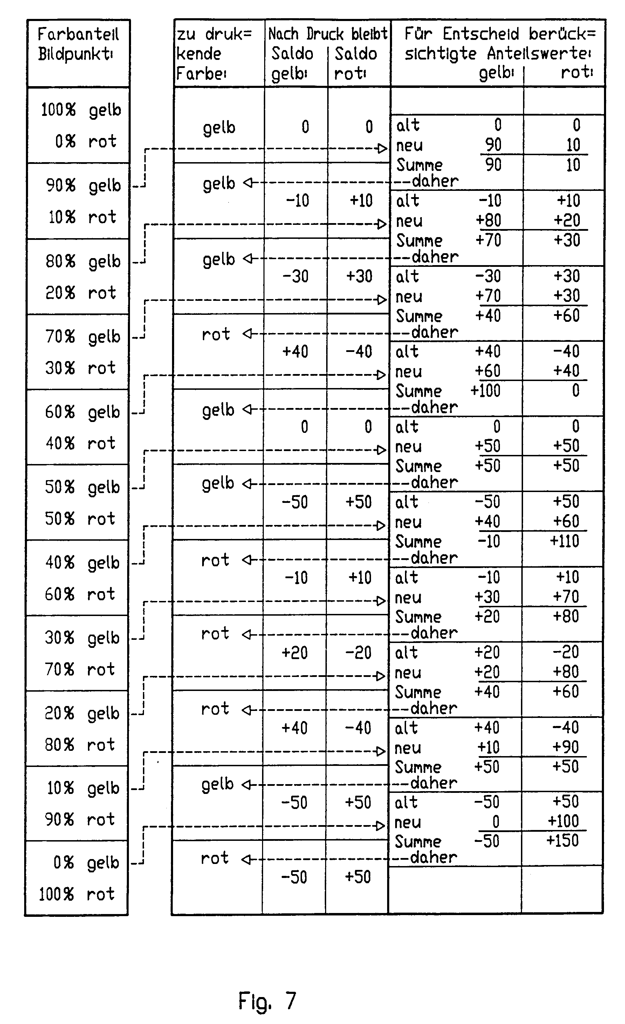

Durch die genannte Zuordnung werden RGB-Anteile der Palettenfarbe durch jene einer definierten Druckfarbe ersetzt, so daß einerseits RGB-Anteile verlorengehen und andere RGB-Anteile im Übermaß beansprucht werden. Daher können gemäß Fig. 7 diese sonst in Verlust geratenen Anteilswerte positiv aufsummiert werden und die im Übermaß beanspruchten RGB-Anteilswerte können abgezogen werden. Die Tabelle 7 zeigt in der linken Spalte z. B. diejeweiligen Farbanteile beim Übergang von Gelb nach Rot. Die Abstufung erfolgt in Schritten von 10%. Sobald ein Anteilswert einen Saldo von über 50 % erreicht, soll eine Farbumschaltung auf diese Farbe erfolgen. Bei Gleichheit der Anteilswerte (50 % gelb, 50 % rot) kann darüber hinaus auch das Gewicht der Farben in der Vergangenheit berücksichtigt werden, also deren bisherige Häufigkeit, so daß daher in den Zeilen 5 und 9 der Fig. 7 (Spalten 5, 6) weiterhin auf Gelb entschieden wird. Unter Heranziehung dieser Schwelle (Farbsignalschwellwert) ergibt sich dann die in der zweiten Spalte gezeigte Farbverteilung Gelb, Gelb, Gelb, Rot, Gelb, Gelb, Rot, Rot, Rot, Gelb, Rot. Darüber hinaus können die Salden (Restsummenanteil) gegebenenfalls auch mit einem wählbaren Memoryfaktor multipliziert werden, der kleiner als 1 ist, und zwar bei jedem neuen Farbpunkt. Die Multiplikation mit dem Memoryfaktor geschieht zu dem Zweck, nur geringfügig enthaltende Farbkomponenten zu unterdrücken, deren sehr seltenes plötzliches Auftreten besonders beim langsamen Abklingen eines Farbtons eher störend empfunden würde.

Das so berechnete und am Bildschirm ausgegebene Musterbild wird abermals inspiziert und gegebenenfalls in einem weiteren alternativen Schritt korrigiert. Hierbei wird je nach den durch den bildhaften Eindruck gegebenen Notwendigkeiten wahlweise einer von mehreren möglichen Filterprozessen eingeschaltet. Dieser Filterprozeß kann in einem Weichzeichnen oder Verschmieren, einem Erhärten des Farbablaufs oder Erhöhen des Farbgradienten, in einer Pixelelimination oder einem Kantenglätten bestehen. Beim Weichzeichnen wird die Steilheit des Verlaufs der RGB-Anteile ermäßigt und gleichzeitig die kleineren Werte der RGB-Anteile erhöht und die größeren dieser Werte erniedrigt. Beim Erhärten des Farbverlaufs wird der umgekehrte Vorgang gewählt. Bei der Pixelelimination werden die RGB-Anteile sehr kleiner Strukturen durch die der Umgebung ersetzt. Beim Kantenglätten werden die Bereiche mit den steilsten RGB-Abfolgen, die in ausgezackter Form vorliegen, in einem ausgewählten Bereich der Musterpunkte vektorisiert und in die gerade Verbindung von Anfangs- und Endpunkt eine gleich steile und gleich gerichtete RGB-Abfolge gelegt. In einem letzten Schritt wird aus den Druckfarbenbelegungen und deren Intensität die Größe der z. B. auf einem Film auszugebenden Rasterpunkte ermittelt. Ein Rasterpunkt ist dabei umso größer, je größer die Intensität ist. Statt der Ausgabe der Rasterpunkte auf Film kann selbstverständlich auch ein anderer Datenträger zur unmittelbaren Weiterverarbeitung z. B. auf numerisch gesteuerten Gravuranlagen Verwendung finden.

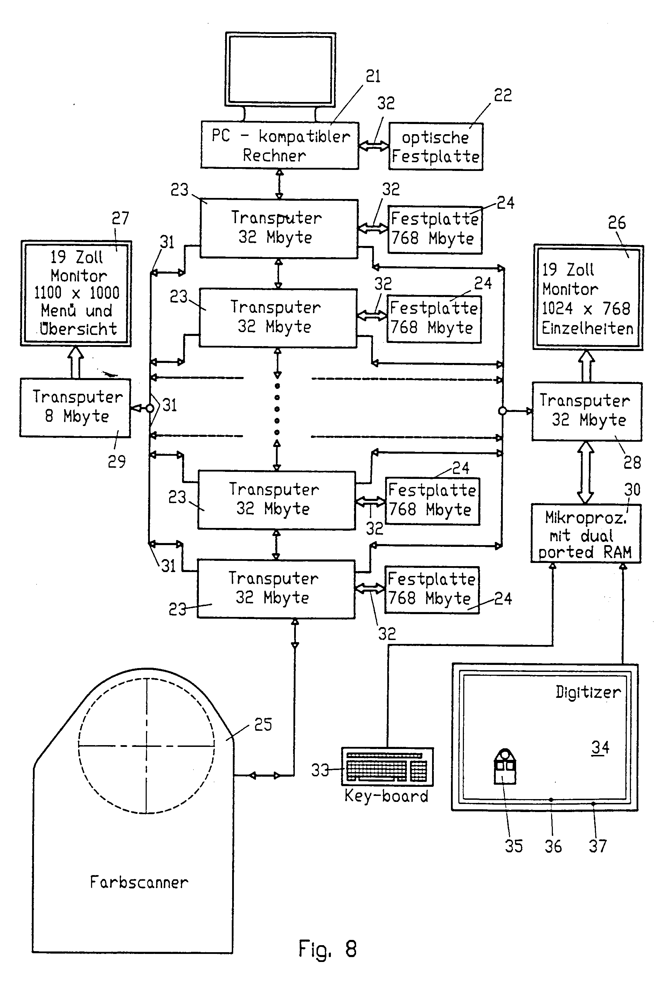

In den Figuren 8 bis 10 ist die vorrichtungsmäßige Ausgestaltung der Erfindung beispielsweise dargestellt. Ein wesentliches Merkmal ist die Verwendung von zwei Großbildschirmen. Einer dieser beiden Monitore dient zur Darstellung der Übersicht der Mustervorlage, zeigt das Bedienmenu und hat auch Platz für die Dialogein- sowie -ausgabe. Der andere Großbildschirm dient zur Darstellung eines zu bearbeitenden Ausschnitts der Mustervorlage. Dies hat den Vorteil, daß alle für die Bearbeitung erforderlichen Musterdaten und Informationen gleichzeitig visuell verfügbar sind.

In Figur 8 bezeichnet 21 den PC-kompatiblen Rechner mit seinem Eingabebildschirm, der als Bediensystem für den nachgeschalteten Anlagenteil dient. Dieser ist auch als Fileserver für die optische Festplatte 22 vorgesehen, welche die fertig bearbeiteten Musterdaten speichert. Der nachgeschaltete Anlagenteil besteht im wesentlichen aus einer Mehrzahl von Transputern 23. Jeder dieser Transputer 23 besteht aus einer Zentralprozessoreinheit, die mit einem Floating-Point-Prozessor und einer Memory-Unit am gleichen Chip ausgerüstet ist. Am gleichen Board befindet sich ein 32 Mbyte großes RAM. Jedem dieser Transputer 23 ist eine eigene magnetische Festplatte 24 mit 768 Mbyte Speicherbereich zugeordnet. Beispielsweise werden vier derartige Einheiten verwendet. Dadurch ist es möglich, das zeilenweise von der Mustervorlage mittels eines Farbscanners 25 gelesene Muster in Gruppen, die jeweils eine Vielzahl von Zeilen umfassen, von den einzelnen Transputern 23 bearbeiten zu lassen. Als Medium für die während der Bearbeitung anfallenden temporären Datenmengen ist jedem Transputer 23 die Festplatte 24 zugeordnet. Die Gesamtheit der Musterdaten wird demnach parallel auf mehrere Festplatten 24 aufgeteilt und ebenso parallel von den Transputern 23 bearbeitet.

Zur Veranschaulichung des Anarbeitungsstands dienen der Detailmonitor 26 und der Übersichtsmonitor 27. Der Detailmonitor 26 wird vom Videotransputer 28 angesteuert und der Übersichtsmonitor 27 vom Videotransputer 29.

Zum Zweck des Datenaustausches sind die Transputer 23 über sehr schnelle serielle bidirektionale Datentransferleitungen 31, auch Computerlinks genannt, untereinander verbunden. Die Datenübertragung von und zu den Festplatten 24 wird über eine 8 bit breite parallele Busleitung 32 durchgeführt. Diese zuletztgenannte Busleitung 32 ist zwischen jedem Transputer 23 und der zugeordneten Festplatte 24 gesondert geführt. Dies bedeutet, daß der Datentransfer zwischen jedem Transputer 23 und seiner Festplatte 24 so gehandhabt werden kann, daß der Verkehr aller übrigen Transputer 23 und ihren Festplatten 24 nicht beeinträchtigt wird und so auf die schnellst mögliche Weise abgewickelt werden kann.

Der Videotransputer 28 hat die Aufgabe, die Daten des gerade aktuellen Mustervorlagenausschnitts dem Detailmonitor 26 zu übermitteln. Zu diesem Zweck ist er mit einem 32 Mbyte großen RAM ausgerüstet. Außerdem obliegt ihm die Aufgabe, die Eingabedaten vom Keyboard 33 und auch die vom Digitizer 34 zu verarbeiten. Damit dieser von der Überwachung der Eingabegeräte Keyboard 33 und Digitizer 34 entbunden ist, wird eine eigenständige Mikroprozessor-Kontrollkarte 30 vorgesehen, die laufend überwacht, ob und von wo Daten eingegeben werden. Diese Mikroprozessor-Kontrollkarte 30 ist mit einem dual ported RAM ausgerüstet, damit Daten sowohl vom Transputer 28 als auch vom Mikroprozessor, der auf der gleichen Karte 30 vorgesehen ist, in den Speicherbereich dieser Karte 30 eingetragen oder von diesem Speicherbereich gelesen werden können.

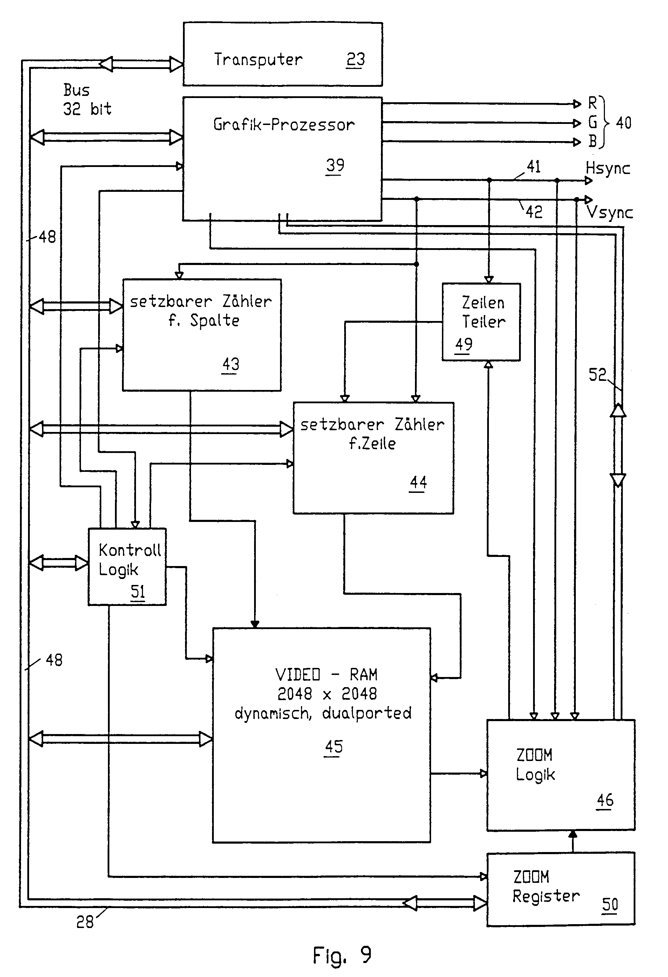

Die Mikroprozessor-Kontrollkarte 30 benutzt einen Single-Chip-Prozessor, um laufend die aktuellen Werte, insbesondere jene vom Digitalisiertablett 34 zu bearbeiten. Der Prozessor wertet jede Bewegung einer Maus 35 auf dem Digitizer aus und übergibt die hierbei ermittelten Daten einem asynchronen, dual ported Kommunikationsspeicher über dessen erstes Port. Der Transputer 28 greift auf diese Daten über dessen zweites Port zu und kann sie so mit maximalem Datendurchsatz, also geringstem Zeitverlust, weiter verarbeiten. Für den Verkehr zwischen Single-Chip-Prozessor und Digitizer 34 genügt ein vergleichsweise geringer Datendurchsatz. Der im Detailmonitor 26 dargestellte Bildausschnitt kann durch Überfahren einer inneren Randlinie 36 und Heranführen der Maus 35 an eine äußerste Randlinie 37 am Digitizer 34 verschoben werden. Dieses Verschieben geschieht desto schneller, je näher die Maus 35 an die äußerste Randlinie 37 herangeführt wird. Die innere Wirkungsweise dieser Einrichtung und deren Aufbau ist im Zusammenhang mit dem Innenaufbau des Videotransputers 28 in der folgenden Fig. 9 genauer beschrieben.

In Fig. 9 bezeichnet 23 wieder einen Transputer, der die Musterdaten über einen Bus 48 in ein 4 Mbyte (2.048 x 2.048 byte) großes Video-RAM 45 lädt. Über einen Grafikprozessor 39 wird aus diesem RAM 45 ein Pixelbereich, der 1.024 x 768 byte groß ist und dem Darstellungsbereich des Monitors entspricht, erstellt und über die RGB-Leitungen 40 an den hier nicht mehr dargestellten Monitor gesendet. Zur Erreichung dieses Zwecks muß das genannte Video-RAM 45 von dem Transputer 23 über die Busleitung 48 mit Musterdaten beladen werden. Außerdem wird dem ZOOM-Register 50 vom Transputer 23 der Zoomfaktor eingeschrieben. Ein setzbares Spaltenregister 43 erhält eine Startadresse, welche besagt, ab welcher Spalte das im Video-RAM 45 abgelegte Muster auf den Monitor auszulesen ist. Das Spaltenregister 43 wird jeweils durch einen Vsync-Impuls, also bei jedem Bildrücklauf oder nach Ausgabe eines vollständigen Bildes, neu gesetzt.

Ein setzbarer Zeilenzähler 44 erhält vom Transputer 23 die Startadresse für die Zeile. Dieser Zeilenzähler 44 besteht genauer gesagt aus zwei Registern, einem Register welches die Startadresse ständig aufbewahrt und einem Zähler, der am Beginn jedes Bildes durch den Vsync-Impuls auf den im ersten Register aufbewahrten Startwert gesetzt wird und durch jeden Hsync-Impuls am Ende jeder Zeile dekrementiert wird. Dieser Vorgang erfährt jedoch eine Abänderung, wenn ein von eins unterschiedlicher Zoomfaktor in das Zoomregister 50 eingeschrieben wurde.

Enthält das Zoomregister 50 z. B. den Zoomfaktor vier, dann laufen die eben geschilderten Prozesse anders ab und diese sollen hier nochmals und etwas genauer beschrieben werden. Das Video-RAM 45 besteht aus einer Reihe von RAM-Bausteinen, die jeweils auch ein Schieberegister (parallel in-seriell out) am gleichen Chip enthalten. Man kann sich dieses Video-RAM 45 so aufgebaut denken, daß alle diese Schieberegister zu einem großen Schieberegister zusammengefaßt sind, in welches eine komplette Musterreihe sofort dann eingetragen wird, wenn die Kontrollogik 51 den Befehl zum Auslesen einer Zeile an das Video-RAM 45 erteilt. Aus diesem Schieberegister ruft nun die Zoom-Logik 46 Pixel um Pixel ab, vervielfacht aber jedes dieser Pixel mit dem Zoomfaktor und sendet diese dann über den Bus 52 an den Grafik-Prozessor 39. Die so übermittelten Pixel enthalten nun noch nicht die Farbwerte, sondern es sind dies Adressen, die ein byte (also von 1 bis 256) lang sind und die in eine Tabelle verweisen, die schon früher als Farbpalette (Fig. 3) bezeichnet wurde. Diese Farbpalette ist in das im Grafik-Prozessor 39 am Chip verfügbare 3 x 256 byte große RAM eingeschrieben worden und zwar am Beginn des Arbeitsprozesses. In diesem RAM stehen nun unter jeder der möglichen Adressen die Farben (bzw. Farbsignalwerte) mit ihren genauen RGB-Anteilen. Diese Angaben werden vom Grafikprozessor 39 behoben und von diesem in analoge RGB-Werte umgewandelt, die dann auf den RGB-Leitungen 40 ausgegeben werden. Auf diese Weise wird Zeile um Zeile abgearbeitet, wobei aber eine Zeile des Video-RAMs 45 bei dem angegebenen Zoomfaktor viermal hintereinander an den Grafikprozessor 39 ausgegeben wird, weil der Zeilenteiler 49, der am Ende jeder vom Grafikprozessor 39 ausgegebenen Zeile einen Hsync-Impuls erhält, diesen entsprechend dem Zoomfaktor herunterteilt und daher erst nach jedem vierten Hsync-Impuls den Zeilenzähler 44 um eins dekrementiert. Der Hsync-Impuls läuft über die Pulsleitung 42 zum Monitor und signalisiert das Zeilenende.

Auch das hardwaremäßige Verschieben des am Monitor 26 dargestellten Bildschirmausschnitts über einen wesentlich größeren wählbaren Speicherbereich kann mit dieser Vorrichtung bewirkt werden. Hierzu braucht nur die Startadresse im Spaltenregister 43 oder jene im Zeilenzähler 44 inkrementiert oder dekrementiert zu werden, wobei dieser Vorgang vom Transputer 23 ausgelöst wird. Das ist genau jener Vorgang, der bei dem Annähern der Maus 35 an den Rand des Digitizers 34 stattfindet. Das damit erreichte schnelle Verschieben des Bildes am Bildschirm ist sehr vorteilhaft. Es wurde aber erst durch die wesentlich größere Auslegung des Videospeichers 45 ermöglicht. Das Video-RAM 45 entspricht 2.048 x 2.048 byte, also 4.194.304 Bildpunkten, wohingegen der Bildschirm nur eine Größe von 768 x 1.024 Pixel = 79.872 Bildpunkte aufweist.

Wenn das am Monitor 26 dargestellte Bild über noch größere Bereiche des Speichers 45 verschoben werden muß, so ist es allerdings erforderlich, Musterdaten durch den Transputer 23 in das Video-RAM 45 nachladen zu lassen. Dies ermöglicht der oben beschriebene innere Aufbau des Video-RAMs 45. Es wurde schon erwähnt, daß eine Zeile des Musters beim Auslesen aus den eigentlichen Speicherzellen zunächst in ein Schieberegister übertragen wird und erst von dort zum Grafikprozessor 39 gelangt. Das Auslesen in das Schieberegister findet in einer sehr kurzen Zeit statt, weil dieses parallel beladen wird. Es steht daher ein vergleichsweise großer Zeitbereich für das Beladen des Video-RAMs 45 durch den Transputer 23 über die Busleitung 48, und zwar jeweils zwischen den Auslesevorgängen von zwei einzelnen Musterreihen, zur Verfügung. Damit dies problemlos geschehen kann, muß das Video-RAM 45 als dual ported RAM ausgeführt sein.

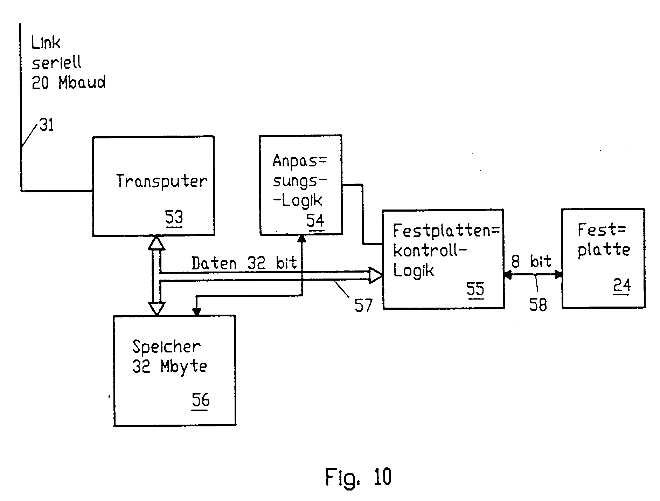

In Fig. 10 gelten die schon früher benützten Bezeichnungen, und es wird ein Detail der Fig. 8 näher beschrieben. Die Transputereinheit 23 enthält neben dem eigentlichen Transputerbaustein 53, der im wesentlichen ein Riscprozessor mit implementierter Floating-Point-Unit ist, eine Anpassungslogik 54 für die Kompatibilisierung der Festplattenlogik 55 mit dem Transputerbaustein 53 und ein ausgedehntes dynamisches RAM 56 von insgesamt 32 Mbyte. Die Festplattenlogik 55 greift auf die Festplatte 24 über einen 8 bit breiten Datenbus 58 zu. Der restliche Datentransfer innerhalb der Transputereinheit 23 läuft über einen 32 bit breiten Datenkanal 57. Die Festplattenkontrollogik 55 liest oder schreibt die nötigen Daten von der oder auf die Festplatte 24 und verkehrt mit dem dynamischen RAM 56 im direct memory access mode unter Umgehung des Transputerbausteins 53.

## Patentansprüche

1. Verfahren zur Erstellung von Farbauszügen aus einer mehrfarbigen Mustervorlage (3), insbesondere für den Einzelfarbendruck, bei dem die Mustervorlage (3) punktweise polychromatisch abgetastet wird, um in einem Farbraum (RGB) liegende Farbsignalwerte (F1, F2, F3) zu erhalten, die zur Bildung der Farbauszüge herangezogen werden, wobei eine vorbestimmte Anzahl von Farbsignalwerten herausgesucht wird, um einen Korrekturfarbraum zu erhalten, die Mustervorlage (3) ein zweites Mal punktweise polychromatisch abgetastet wird, und die dabei erhaltenen Farbsignalwerte durch die an derselben Stelle liegenden Farbsignalwerte des Korrekturfarbraums ersetzt werden,
**dadurch gekennzeichnet,** daß
- zur Bildung des Korrekturfarbraums eine vorbestimmte Anzahl von am häufigsten auftretenden Farbsignalwerten herausgesucht wird,
- das Heraussuchen automatisch geschieht, und
- die Mustervorlage (3) bei der zweiten Abtastung in einem feineren geometrischen Raster als bei der ersten Abtastung gescannt wird.

2. Verfahren nach Anspruch 1, **dadurch gekennzeichnet**, daß
- die Mustervorlage (3) in einem weiteren Schritt nur unter Verwendung der nach der zweiten Abtastung erhaltenen Farbsignalwerte des Korrekturfarbraums reproduziert wird,
- anhand des reproduzierten Musterbilds eine Anzahl vorbestimmter Farben ausgewählt wird und
- die Farbsignalwerte des Korrekturfarbraums durch die diesen ausgewählten Farben entsprechenden Farbsignalwerte ersetzt werden.

3. Verfahren nach Anspruch 1, **dadurch gekennzeichnet**, daß zur Bildung des Korrekturfarbraums Adressen des Farbraums mit demjenigen der am häufigsten auftretenden Farbsignalwerte belegt werden, zu dem sie den geringsten topologischen Abstand haben.

4. Verfahren nach Anspruch 2, **dadurch gekennzeichnet**, daß ein Farbsignalwert des Korrekturfarbraums durch einen solchen einer ausgewählten Farbe ersetzt wird, zu der er im Korrekturfarbraum den geringsten topologischen Abstand hat.

5. Verfahren nach Anspruch 3 oder 4, **dadurch gekennzeichnet**, daß an Stelle der topologischen Abstände die physiologischen Abstände herangezogen werden.

6. Verfahren nach einem der Ansprüche 2 bis 5, **dadurch gekennzeichnet**, daß bei einem Ersatz von Farbsignalwerten des Korrekturfarbraums durch denjenigen einer ausgewählten Farbe Überschüsse oder Defizite von Farbanteilen (Rot, Grün, Blau) der zwei nächstgelegenen ausgewählten Farben von Adresse zu Adresse aufsummiert werden, und daß bei Erreichen eines Farbsignalschwellwerts für jeweils eine dieser ausgewählten Farben deren Farbsignalwert zur Musterpunktbildung verwendet wird, und zwar unter Verrechnung der Farbanteile dieses Farbsignalwerts mit den bis dahin durch Aufsummierung erhaltenen Farbanteilen.

7. Verfahren nach Anspruch 6, **dadurch gekennzeichnet**, daß die Überschüsse oder Defizite nach dem Setzen eines jeweiligen Musterpunkts mit einem Memoryfaktor multipliziert werden, der kleiner als 1 ist.

8. Verfahren nach einem der Ansprüche 1 bis 7, **dadurch gekennzeichnet**, daß die Auslagerung der Farbauszüge auf entwickelbaren Schwarz-Weiß-Filmen erfolgt.

9. Verfahren nach einem der Ansprüche 1 bis 7, **dadurch gekennzeichnet**, daß die Auslagerung der Farbauszüge auf einem magnetischen Datenträger erfolgt.

10. Verfahren nach einem der Ansprüche 2 bis 9, **dadurch gekennzeichnet**, daß die Größe von Bildpunkten der Farbauszüge dem relativen Anteil der verwendeten ausgewählten Farbe entspricht.

11. Verfahren nach einem der Ansprüche 1 bis 10, **dadurch gekennzeichnet**, daß bei der punktweisen Abtastung die Farbanteile intensitätsgetreu getrennt gemessen und in Digitalwerte umgewandelt werden.

12. Verfahren nach Anspruch 11, **dadurch gekennzeichnet**, daß bei der punktweisen Abtastung jeweils drei Farbanteile gemessen werden, so daß eine trichromatische Abtastung durchgeführt wird.

13. Verfahren nach Anspruch 12, **dadurch gekennzeichnet**, daß für jeden Abtastpunkt die Farbanteile für Rot, Grün und Blau gemessen werden.

14. Verfahren nach Anspruch 12 oder 13, **dadurch gekennzeichnet**, daß jeweils durch drei gemessene Farbanteile eine Zelle im Farbraum (RGB) bzw. Korrekturfarbraum adressiert und in die Zelle eine Adresse einer Farbpalette eingeschrieben wird, unter der einer der am häufigsten auftretenden Farbsignalwerte bzw. der Farbsignalwert einer ausgewählten Farbe gespeichert ist.

15. Verfahren nach Anspruch 14, **dadurch gekennzeichnet**, daß die Farbinformation eines Musterbilds (3) als String von Farbpaletten-Adressen gespeichert wird.

16. Verfahren nach Anspruch 15, **dadurch gekennzeichnet**, daß dieser String von Farbpaletten-Adressen zur Erzeugung der Farbauszüge in einer der Anzahl verschiedener Farbpaletten-Adressen entsprechende Anzahl von Strings unterteilt wird, die jeweils nur dieselben Farbpaletten-Adressen enthalten.

17. Vorrichtung zur Durchführung des Verfahrens nach Anspruch 1 bis 16, **dadurch gekennzeichnet**, daß eine Mehrzahl von Transputereinheiten (23) vorgesehen ist, jeder Transputereinheit (23) jeweils eine gesonderte magnetische Festplatte (24) zur Datenspeicherung zugeteilt ist, diese Transputereinheiten (23) an einen gemeinsamen Datenbus gekoppelt sind, über welchen Musterdaten von z. B. einem Scanner (25) gesendet werden, und alle diese Transputereinheiten (23) über jeweils einen gemeinsamen Bus (31) an einen Transputer (29) mit Großbildmonitor (27) für die Gesamtbildausgabe und Bedienfunktionsanzeige und an einen weiteren Transputer (28) mit Großbildmonitor (26) für die Detailbildausgabe gekoppelt sind.

18. Vorrichtung nach Anspruch 17, **dadurch gekennzeichnet**, daß den Transputereinheiten (23) ein gemeinsamer Rechner (21) mit Bildschirm als Bedien-Schnittstelle zugeordnet ist.

## Claims

1. Method for producing colour separations from a multicoloured master original (3), in particular for single-colour printing, in which the master original (3) is scanned polychromatically in a pointwise fashion in order to obtain colour signal values (F1, F2, F3) which are located in a colour space (RGB) and are used to form the colour separations, a predetermined number of colour signal values being selected in order to obtain a correction colour space, the master original (3) being scanned a second time polychromatically in a pointwise fashion, and the colour signal values obtained in the process being replaced by the colour signal values of the correction colour space which are located at the same point, characterized in that
- in order to form the correction colour space a predetermined number of the most frequently occurring colour signal values is selected,
- the selection is performed automatically, and
- in the second scanning, the master original (3) is scanned in a finer geometrical matrix than in the first scanning.

2. Method according to Claim 1, characterised in that
- the master original (3) is reproduced in a further step only by using the colour signal values of the correction colour space obtained after the second scanning,
- a number of predetermined colours is selected with the aid of the reproduced master image, and
- the colour signal values of the correction colour space are replaced by the colour signal values corresponding to these selected colours.

3. Method according to Claim 1, characterised in that for the purpose of forming the correction colour space, addresses of the colour space are occupied by that one of the most frequently occurring colour signal values from which they have the smallest topological distance.

4. Method according to Claim 2, characterised in that a colour signal value of the correction colour space is replaced by one of a selected colour from which it has the smallest topological distance in the correction colour space.

5. Method according to Claim 3 or 4, characterised in that the physiological distances are used instead of the topological distances.

6. Method according to one of Claims 2 to 5, characterised in that when colour signal values of the correction colour space are replaced by those of a selected colour, surpluses or deficits of colour components (red, green, blue) of the two closest selected colours are summed from address to address, and in that when a colour signal threshold value is reached for in each case one of these selected colours the colour signal value thereof is used for master point formation, to be precise by offsetting the colour components of this colour signal value against the colour components obtained so far by summing.

7. Method according to Claim 6, characterised in that after setting a respective master point, the surpluses or deficits are multiplied by a memory factor which is less than 1.

8. Method according to one of Claims 1 to 7, characterised in that the relocation of the colour separations is performed on developable black and white films.

9. Method according to one of Claims 1 to 7, characterised in that the relocation of the colour separations is performed on a magnetic data carrier.

10. Method according to one of Claims 2 to 9, characterised in that the magnitude of pixels of the colour separations corresponds to the relative proportion of the selected colour used.

11. Method according to one of Claims 1 to 10, characterised in that during scanning in a pointwise fashion the colour components are measured separately with intensity fidelity and converted into digital values.

12. Method according to Claim 11, characterised in that during scanning in a pointwise fashion three colour components are measured in each case so that a trichromatic scanning is carried out.

13. Method according to Claim 12, characterised in that the colour components for red, green and blue are measured for each scanning point.

14. Method according to Claim 12 or 13, characterised in that a cell in the colour space (RGB) or correction colour space is addressed by three measured colour components in each case, and there is input into the cell an address of a colour palette under which one of the most frequently occurring colour signal values or the colour signal value of a selected colour is stored.

15. Method according to Claim 14, characterised in that the colour information of a master image (3) is stored as a string of colour palette addresses.

16. Method according to Claim 15, characterised in that this string of colour palette addresses for producing the colour separations is subdivided into a number, corresponding to the number of different colour palette addresses, of strings which in each case contain only the same colour palette addresses.

17. Device for carrying out the method according to Claims 1 to 16, characterised in that a plurality of transputer units (23) is provided, each transputer unit (23) is in each case assigned a separate magnetic hard disk (24) for data storage, these transputer units (23) are coupled to a common data bus via which master data are sent from, for example, a scanner (25), and all these transputer units (23) are coupled via in each case one common bus (31) to a transputer (29) having a large-screen monitor (27) for the overall image output and an operating function display, and to a further transputer (28) having a large-screen monitor (26) for the detailed image output.

18. Device according to Claim 17, characterised in that the transputer units (23) are assigned a common computer (21) with screen as operating interface.

## Revendications

1. Procédé de production d'extraits de couleur à partir d'un modèle (3) polychrome, en particulier pour l'impression par couleur individuelle, dans lequel le modèle (3) est exploré de façon polychromatique point par point, afin d'obtenir des valeurs de signaux de couleur (F1, F2, F3) situées dans un système de couleurs (RGB), ces signaux étant utilisés pour constituer des extraits de couleur, un nombre prédéterminé de valeurs de signaux de couleur étant collecté pour obtenir un système de couleurs de correction, le modèle (3) étant exploré une deuxième fois de façon polychromatique point par point et les valeurs de signaux de couleur alors obtenues étant remplacées par les valeurs de signaux de couleur situées au même endroit du système de couleurs de correction,
caractérisé en ce que
- un nombre prédéterminé de valeurs de signaux de couleur se produisant le plus fréquemment est collecté, pour constituer le système de couleurs de correction,
- la collecte est effectuée automatiquement, et
- le modèle (3) est exploré lors de la deuxième exploration, suivant un balayage géométrique plus fin que celui qui est utilisé lors de la première exploration.

2. Procédé selon la revendication 1, caractérisé en ce que :
- le modèle (3) est reproduit lors d'une étape supplémentaire en utilisant seulement les valeurs de signaux de couleur du système de couleurs de correction, obtenues lors de la deuxième exploration,
- un nombre de couleurs prédéterminé est choisi à l'aide du modèle reproduit, et
- les valeurs de signaux de couleur du système de couleurs de correction sont remplacées par les valeurs de signaux de couleur correspondant à ces couleurs sélectionnées.

3. Procédé selon la revendication 1, caractérisé en ce que pour former le système de couleurs de correction, on utilise des adresses du système de couleurs présentant celle des valeurs de signaux de couleurs les plus fréquentes avec laquelle la distance topologique est minimale.

4. Procédé selon la revendication 2, caractérisé en ce qu'une valeur de signal de couleur du système de couleurs de correction est remplacée par une couleur choisie de telle sorte que la distance topologique dans le système de couleurs de correction soit minimale entre la valeur de signal de couleur du système de correction de couleurs et la couleur choisie.

5. Procédé selon la revendication 3 ou 4, caractérisé en ce qu'au lieu des distances topologiques on utilise les distances physiologiques.

6. Procédé selon l'une des revendications 2 ou 5, caractérisé en ce que, en cas de remplacement des valeurs de signaux de couleur du système de couleurs de correction par l'une des couleurs sélectionnées, les excès ou les insuffisances des composantes de couleur (rouge, vert, bleu) des deux couleurs les plus proches sont additionnés adresse par adresse, et en ce que, lors de l'atteinte d'une valeur de seuil de signal de couleur, pour chacune de ces couleurs sélectionnées, sa valeur de signal de couleur est utilisée pour la formation du point du modèle et notamment en calculant les composantes de couleurs de cette valeur de signal de couleur avec les composantes de couleurs obtenues par sommation jusque là.

7. Procédé selon la revendication 6, caractérisé en ce que les excès ou les insuffisances constatés après placement d'un point spécifique du modèle sont multipliés par un facteur mémoire inférieur à 1.

8. Procédé selon l'une des revendications 1 à 7, caractérisé en ce que le transfert des extraits de couleur s'effectue sur des films noir et blanc développables.

9. Procédé selon l'une des revendications 1 à 7, caractérisé en ce que le transfert des extraits de couleur s'effectue sur un support de données magnétique.

10. Procédé selon l'une des revendications 2 à 9, caractérisé en ce que la taille des points image des extraits de couleur correspond à la proportion relative de la couleur sélectionnée utilisée.

11. Procédé selon l'une des revendications 1 à 10, caractérisé en ce que, lors de l'exploration point par point, les composantes de couleur sont mesurées séparément, en respectant la fidélité en intensité, et sont converties en valeurs numériques.

12. Procédé selon la revendication 11, caractérisé en ce que, lors de l'exploration point par point, on effectue chaque fois la mesure de trois composantes de couleurs, de manière à effectuer une exploration tri-chromatique.

13. Procédé selon la revendication 12, caractérisé en ce que pour chaque point d'exploration on mesure les composantes de couleur pour le rouge, le vert et le bleu.

14. Procédé selon la revendication 12 ou 13, caractérisé en ce qu'on adresse, par trois composantes de couleurs mesurées, chaque cellule dans le système de couleurs (RGB) ou dans le système de couleurs de correction et en ce que l'on inscrit dans chaque cellule une adresse d'une palette de couleurs, adresse dans laquelle l'une des valeurs de signal de couleur rencontrées le plus fréquemment ou la valeur de signal de couleur d'une couleur sélectionnée est stockée en mémoire.

15. Procédé selon la revendication 14, caractérisé en ce que l'information de couleur d'une image à modèle (3) est stockée sous forme d'une chaîne d'adresses de palettes de couleurs.

16. Procédé selon la revendication 15, caractérisé en ce que cette chaîne d'adresses de palettes de couleurs est subdivisée, pour produire les extraits de couleur, en un nombre de chaînes correspondant au nombre des différentes adresses de palettes de couleurs, ces chaînes contenant chacune seulement les mêmes adresses de palettes de couleurs.

17. Dispositif de mise en oeuvre du procédé selon l'une des revendications 1 à 16, caractérisé en ce qu'une pluralité d'unités de transputeur (23) est prévue, à chaque unité de transputeur (23) étant attribuée un disque dur (24) magnétique particulier pour effectuer le stockage des données, ces unités de transputeur (23) étant couplées à un bus de données commun par l'intermédiaire duquel des données du modèle venant par exemple d'un scanner (25) sont envoyées, et toutes ces unités de transputeur (23) étant couplées, chaque fois par un bus commun (31), à un transputeur (29) ayant un moniteur pour grande image (27) pour obtenir une restitution globale de l'image et un affichage des fonctions d'utilisation et à un autre transputeur (28) ayant un moniteur pour grande image (26) pour obtenir une image de détail.

18. Dispositif selon la revendication 17, caractérisé en ce qu'un calculateur (21) commun ayant un écran servant d'interface utilisateur est associé aux unités de transputeur (23).
